# EUROPÄISCHE PATENTSCHRIFT

(11) **EP 1 076 398 B1**
(45) Veröffentlichungstag und Bekanntmachung des Hinweises auf die Patenterteilung: **08.12.2004**
(21) Anmeldenummer: 00115876.5
(22) Anmeldetag: 25.07.2000
(51) Int. Cl.: H02K 5/16, H02K 5/167, H02K 5/08

(54) **Motor**
Motor
Moteur

(30) Priorität: 10.08.1999 DE 29913442 U
(43) Veröffentlichungstag der Anmeldung: 14.02.2001
(73) Patentinhaber: ebm-papst St. Georgen GmbH & Co. KG, 78112 St. Georgen (DE)
(72) Erfinder: Wrobel, Günter, 78050 VS-Villingen (DE)
(74) Vertreter: Raible, Hans, Dipl.-Ing.

(56) Entgegenhaltungen:
- EP-A- 0 658 895
- US-A- 5 258 672
- US-A- 5 274 289
- US-A- 5 743 656
- US-A- 5 806 169
- HARMSEN S: "LEISE UND LANGLEBIG" , F & M FEINWERKTECHNIK MIKROTECHNIK MIKROELEKTRONIK, CARL HANSER GMBH & CO, DE, VOL. 105, NR. 1/2, PAGE(S) 53-56 XP000721642 ISSN: 0944-1018 * Seite 55, Spalte 1 - Spalte 2; Abbildung 6 *
- PATENT ABSTRACTS OF JAPAN vol. 1998, no. 12, 31. Oktober 1998 (1998-10-31) & JP 10 191611 A (SANYO DENKI CO LTD), 21. Juli 1998 (1998-07-21)

## Beschreibung

Die Erfindung betrifft einen Motor mit einem mit einer Rotorwelle versehenen Rotor und einem Stator, in dessen radial innerem Bereich sich ein Lagertragrohr befindet, in dem ein Gleitlagerelement für die Lagerung der Rotorwelle angeordnet ist. Ein derartiger Motor ist bekannt aus der US 4 955 791 A.

Aus der US 5 274 289 kennt man einen Motor mit einem mit einer Rotorwelle versehenen Rotor und einem Stator, in dessen radial innerem Bereich sich ein Lagertragrohr befindet, in welchem ein Gleitlagerelement für die Lagerung der Rotorwelle angeordnet ist,
mit einer im Bereich des freien Endes der Rotorwelle vorgesehenen Kappe, welche radial abstehende Krallen aus Blech aufweist, mit deren Hilfe sie in einem zugeordneten Bereich des Lagertragrohrs befestigt ist und das Gleitlagerelement in seiner axialen Lage im Lagertragrohr fixiert,
wobei die Kappe im Bereich ihres Innenumfangs radiale Kammern für die Aufnahme von Schmiermittel aufweist, um ein Zurückströmen von Schmiermittel aus der Kappe zum Gleitlagerelement zu ermöglichen.

Die US 5 258 672 zeigt einen Lagerdeckel in Form einer Schraube, in der sich ein Anlaufplättchen für eine Spurkuppe befindet. Das Sinterlager wird nicht festgehalten, und für sein Schmiermittel sind keine Aufnahmemöglichkeiten vorgesehen. Bei einer dort gezeigten Variante kann das Schmiermittel direkt weglaufen, und das Sinterlager ist durch einen Ring gesichert.

Es ist eine Aufgabe der Erfindung, einen neuen Motor der eingangs genannten Art bereitzustellen.

Nach der Erfindung wird diese Aufgabe gelöst durch einen Motor gemäß Patentanspruch 1. Dadurch, dass die radialen Kammern der Kappe mit der zugeordneten Stirnseite des Gleitlagerelements in direkter Verbindung stehen, wird ein einfacher, direkter Kreislauf des Schmiermittels im Lagersystem ermöglicht. Die gegen die Stirnseite des Gleitlagerelements anliegenden Teile der Kappe bilden im Zusammenwirken mit dem Gleitlagerelement Hohlräume, welche radial nach außen im wesentlichen abgeschlossen sind, so dass sich eine Platz sparende Bauweise ergibt und im Inneren des Motors ein im wesentlichen geschlossener Schmiermittel-Kreislauf entsteht, was Schmiermittelverluste reduziert und zu einer langen Lebensdauer des Motors beiträgt.

Eine bevorzugte Weiterbildung der Erfindung ist Gegenstand des Anspruchs 5. Durch diese Abdichtung wird die Lebensdauer des Motors weiter erhöht, da sie einen Verlust von Schmiermittel im Bereich der Kappe weitgehend verhindert.

Weitere Einzelheiten und vorteilhafte Weiterbildungen der Erfindung ergeben sich aus dem im folgenden beschriebenen und in der Zeichnung dargestellten, in keiner Weise als Einschränkung der Erfindung zu verstehenden Ausführungsbeispiel, sowie aus den Unteransprüchen. Es zeigt:
- Fig. 1: einen Längsschnitt durch eine bevorzugte Ausführungsform eines erfindungsgemäßen Motors, hier in Gestalt eines elektronisch kommutierten Außenläufermotors (ECM),
- Fig. 2: eine teilweise Draufsicht auf ein Verschlussteil für das in Fig. 1 untere Ende des Lagertragrohres, gesehen in Richtung des Pfeiles II in Fig. 3 und in seinem Zustand vor der Montage,
- Fig. 3: einen Schnitt durch das Verschlussteil, gesehen in Richtung der Linie III-III der Fig. 2, ebenfalls im Zustand vor der Montage,
- Fig. 4: eine Draufsicht auf das Verschlussteil der Fig. 2 und 3, gesehen in Richtung des Pfeiles IV der Fig. 3 und ebenfalls im Zustand vor der Montage,
- Fig. 5: eine Draufsicht auf ein Band, aus dem Teile zum Bilden einer Federkralle ausgestanzt und tiefgezogen worden sind, und
- Fig. 6: einen Schnitt, gesehen längs der Linie VI-VI der Fig. 5

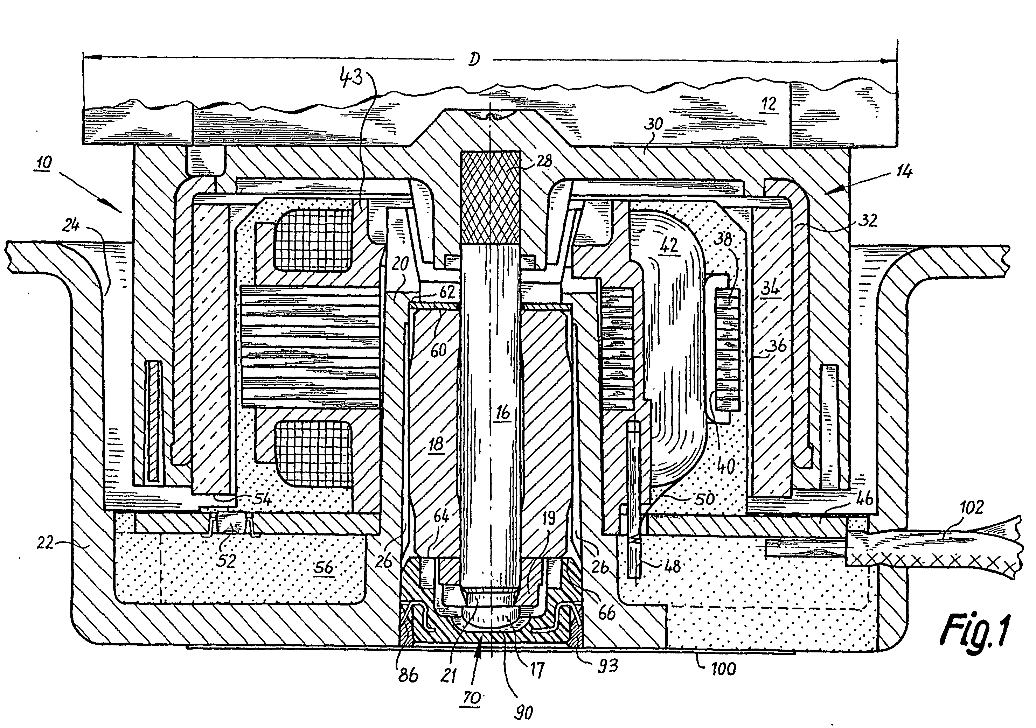

Fig. 1 zeigt stark vergrößert einen Längsschnitt durch einen elektronisch kommutierten Außenläufermotor 10, der zum Antrieb eines Radiallüfterrades 12 dient, welches auf der Oberseite eines Außenrotors 14 angeordnet ist und von diesem direkt angetrieben wird. Der Außenrotor 14 kann z.B. einen Außendurchmesser von 35 mm haben, und das Radiallüfterrad 12 einen Durchmesser D von 40 mm. Das Ausführungsbeispiel zeigt also einen Kleinstmotor.

Der Außenrotor 14 hat eine Rotorwelle 16, zu deren radialer Lagerung ein Doppel-Sinterlager 18 bekannter Bauart dient, das in einem Lagertragrohr 20 angeordnet ist, welches mit nach oben ragenden Fortsätzen versehen ist. Die Rotorwelle 16 hat an ihrem freien Ende eine Spurkuppe 17, die zur axialen Lagerung des Rotors 14 in Richtung nach unten dient. Zur Lagerung in Richtung nach oben dient ein Anlaufglied 19, das in einer Nut 21 der Welle 16 befestigt ist.

Das Lagertragrohr 20 ist einstückig ausgebildet mit einem Trägerteil 22, das eine Art runde Rinne 24 bildet, in welcher der Motor 10 zum großen Teil angeordnet ist. Trageteil 22 und Lagertragrohr 20 können zur Gewichtserspamis als Formstück aus einem geeigneten Kunststoff hergestellt werden.

Das Lagertragrohr 20 hat auf seiner Innenseite axiale Kanäle 26, die einen Umlauf von Schmierstoff ermöglichen.

An das in Fig. 1 obere Ende 28 der Rotorwelle 16 ist ein glockenförmiges Trageteil 30 aus Kunststoff angespritzt. In dieses Teil 30 ist ein etwa zylindrisches magnetisches Rückschlussteil 32 (Weicheisen) eingespritzt, und in diesem befindet sich ein radial magnetisierter Rotormagnet 34.

Innerhalb des Rotormagneten 34, und durch einen Luftspalt 36 von diesem getrennt, befindet sich ein Statorblechpaket 38, in dessen Nuten 40 eine Statorwicklung 42 angeordnet ist, die wie dargestellt auf einem Wickelkörper 43 angeordnet ist.

Wie man aus Fig. 1 erkennt, ist das Statorblechpaket 38 symmetrisch zum Rotormagneten 34 angeordnet, d.h. in der axialen Lage, in die sich der Rotor 14 frei einstellen würde, wenn er axial nicht gelagert wäre und wenn keine sonstigen axialen Kräfte auf ihn wirken. Das Statorblechpaket 38 ist auf der Außenseite des Lagertragrohrs 20 befestigt.

An der unteren Seite des Stators befindet sich eine Leiterplatte 46. Durch diese ragen Stifte 48, die am Wickelkörper 43 befestigt sind und an denen die Anschlüsse 50 der Statorwicklung 42 angeschlossen sind. Auch befindet sich in der Leiterplatte 46 ein Hall-IC 52, der vom Rotormagneten 34 gesteuert wird und deshalb in der Nähe von dessen Stirnseite 54 angeordnet ist. Der Stator und die Leiterplatte 46 sind in der dargestellten Weise mit einem Kunststoff 56 umspritzt, um sie gegen Feuchtigkeit etc. zu schützen. Der Kunststoff 56 erstreckt sich auch über den gesamten Außenumfang des Stators, also bis in den Luftspalt 36, so daß der Stator im Bereich des Luftspalts eine zylindrische Umfangsfläche hat.

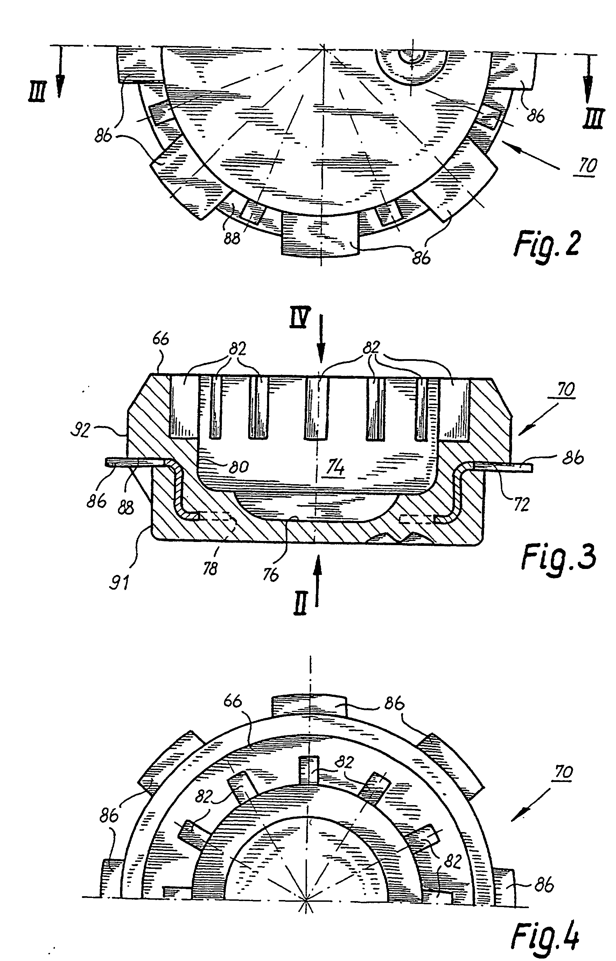

Das Sinter-Doppellager 18 liegt, wie dargestellt, mit seinem in Fig. 1 oberen Ende gegen eine Ringscheibe 60 an, deren äußerer Rand an einer Schulter 62 auf der Innenseite des Lagertragrohrs 20 abgestützt ist und deren innerer Rand sich praktisch bis zur Welle 16 erstreckt. Gegen das untere Ende 64 des Sinter-Doppellagers 18 liegen das Anlaufteil 19 und der obere Rand 66 (vgl. Fig. 3 und 4) eines Kunststoff-Verschlussteils 70 an, das in den Fig. 2 bis 4 in einem noch größeren Massstab dargestellt ist, um seine verschiedenen Einzelheiten sichtbar zu machen. In dieses Verschlussteil 70 ist eine Federkralle 72 eingespritzt, die dazu dient, dieses Verschlussteil 70 in einer definierten Lage fest im Lagertragrohr 20 zu verankern, wie das Fig. 1 zeigt. Man kann dieses Verschlussteil 70 auch als Stopfen bezeichnen, oder als Kappe oder Verschlusskappe, und das gesamte Teil als Federkrallenkappe oder -stopfen.

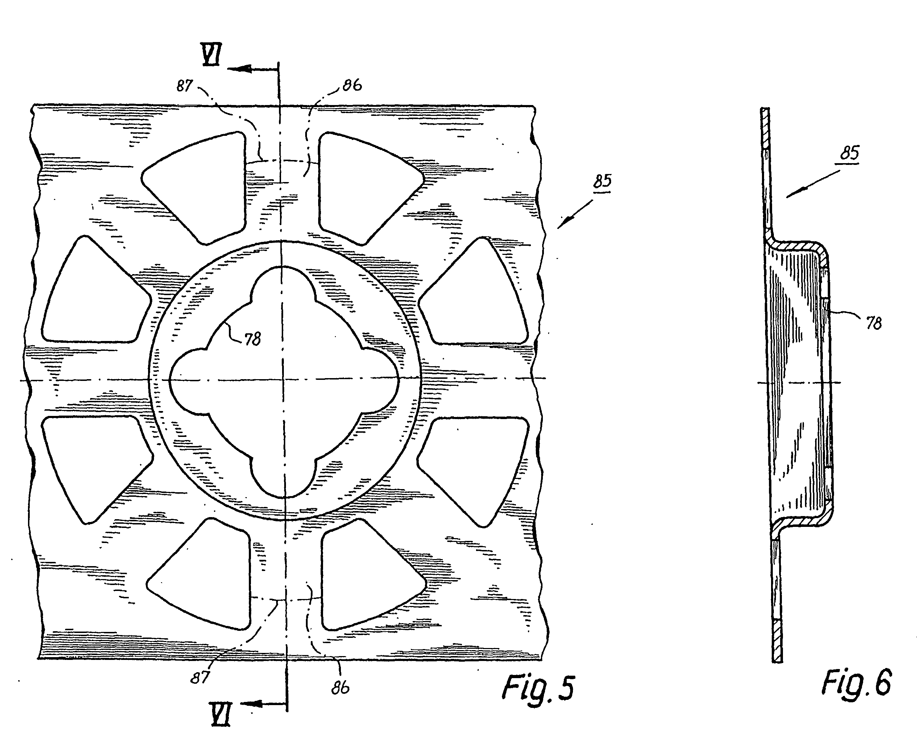

Das Verschlussteil 70 hat auf seiner Innenseite eine Ausnehmung 74 mit einer Bodenmulde 76 (Fig. 3), gegen die ggf. die Spurkuppe 17 anliegt und so eines der Axiallager für die Rotorwelle 16 bildet. Im Bereich dieser Bodenmulde 76 hat das Federkrallenteil 72 eine Ausnehmung 78, deren Form aus Fig. 5 hervorgeht. Dadurch ist das Verschlussteil 70 im Bereich der Bodenmulde 76 elastisch, und kann deshalb Stöße besser dämpfen. Dies trägt zu einem ruhigen Lauf des Motors bei.

Im Anschluss an die Bodenmulde 76 erweitert sich das Teil 70 zu einer Ausnehmung 80 (Fig. 3) größeren Durchmessers, an deren Peripherie zwölf Kammern 82 vorgesehen sind, in denen sich Schmieröl sammeln kann, das vom Anlaufglied 19 abgeschleudert wurde. Da diese Kammern 82 in Richtung zum Sinterlager 18 geöffnet sind, kann das Öl aus ihnen zum Sinterlager 18 zurückströmen und einen Schmierkreislauf aufrechterhalten, was zu einer hohen Lebensdauer des Motors 10 führt.

Das Federkrallenteil 72, z.B. aus Stahl- oder Bronzeblech, hat an seiner Peripherie acht Blechlappen 86, die im Zustand vor der Montage radial nach außen ragen. Sie befinden sich im Bereich einer Ringschulter 88 des Verschlussteils 70. Diese Ringschulter verbindet einen zylindrischen Abschnitt 91 kleineren Durchmessers mit einem zylindrischen Abschnitt 92 größeren Durchmessers und ermöglicht gemäß Fig. 1 ein Abbiegen der Blechlappen 86 mit einem ausreichend großen Biegeradius, aber nur nach unten. Wie in Fig. 5 angedeutet, entstehen die Lappen 86 durch Abtrennen der Peripherie eines Stanzteils 85 längs einer strichpunktiert angedeuteten Linie 87.

Nach der Montage des Rotors 14, d.h. nach Befestigung des Anlageglieds 19 in der Nut 21, wird also das Verschlussglied 70 von unten in das Innere des Lagertragrohrs 20 eingepresst. Dabei biegen sich die Blechlappen 86 um und werden zu Blechkrallen, die sich im Lagertragrohr 20 verankern. Das Verschlussglied 70 presst mit seinem oberen Rand 66 das Sinter-Doppellager 18 nach oben gegen die Ringscheibe 60 und fixiert dadurch dieses Sinterlager 18. Gleichzeitig bildet das Verschlussglied 70 in der beschriebenen Weise mit seiner Bodenmulde 76 eine Lagerfläche für die axiale Lagerung der Spurkuppe 17 der Rotorwelle 16. Dies ermöglicht eine Lagerung des Rotors 14, ohne dass diesen eine Magnetkraft nach unten oder oben zieht. Das Fehlen einer solchen Magnetkraft, die auch als "magnetischer Zug" bezeichnet wird, führt zu einem leiseren Lauf des Motors, da die Größe einer derartigen Magnetkraft von der Drehstellung des Rotors 14 abhängig ist, so dass bei einer Drehung des Rotors 14 diese Magnetkraft periodisch fluktuieren würde.

Wie man aus Fig. 1 klar erkennt, ist am unteren Ende der Spurkuppe 17 ein kleines Spiel 90 von ca. 0,2 mm vorgesehen, wenn das Anlaufglied 19 gegen das untere Ende 64 des Sinterlagers 18 anliegt. Wenn z.B. bei der Drehung des Rotors 14 das Lüfterrad 12 auf den Rotor 14 eine nach unten wirkende Kraft erzeugt, legt sich die Spurkuppe 17 gegen die Bodenmulde 76, die dann als Axiallager für den Rotor 14 wirkt.

Nach der Fixierung des Verschlussteils 70 wird der freie Raum zwischen diesem und der Innenseite des Lagertragrohrs 20 mit einem Klebstoff 93 (oder einer geeigneten Dichtmasse) gefüllt, um dort das Austreten von Schmieröl zu verhindern. Hierdurch wird die Lebensdauer des Motors 10 erhöht, da dann das Öl im Inneren des Lagers zirkuliert.

Auf dem unteren Teil des Motors 10 wird abschließend ein Typenschild 100 aufgebracht, welches die Verschlusskappe 70 überdeckt und diese für den Benutzer unsichtbar macht. Ein Anschlusskabel des Motors 10 ist mit 102 bezeichnet. Solche Motoren laufen typisch mit einer Gleichspannung von 12 oder 24 V.

Naturgemäß sind im Rahmen der vorliegenden Erfindung, die durch die Ansprüche definiert wird, vielfache Abwandlungen und Modifikationen möglich.

## Patentansprüche

1. Motor mit einem mit einer Rotorwelle (16) versehenen Rotor (14) und einem Stator (38, 42), in dessen radial innerem Bereich sich ein Lagertragrohr (20) befindet, in welchem ein Gleitlagerelement (18) für die Lagerung der Rotorwelle (16) angeordnet ist,
mit einer im Bereich des freien Endes (17) der Rotorwelle (16) vorgesehenen Kappe (70), welche radial abstehende, in die Kappe (70) eingespritzte Krallen (86) aus Stahl- oder Bronzebtech aufweist, mit deren Hilfe sie in einem zugeordneten Bereich des Lagertragrohrs (20) befestigt ist und das Gleitlagerelement (18) in seiner axialen Lage im Lagertragrohr (20) fixiert,
wobei die Kappe (70) im Bereich ihres Innenumfangs (18) radiale Kammern (82) für die Aufnahme von Schmiermittel aufweist, welche Kammern (82) mindestens teilweise mit der zugeordneten Stirnseite (64) des Gleitlagerelements (18) in direkter Verbindung stehen, um ein Zurückströmen von Schmiermittel aus der Kappe (70) zum Gleitlagerelement (18) zu ermöglichen,
und die von den Kammern (82) zusammen mit der zugeordneten Stirnseite (64) des Gleitlagerelements (18) gebildeten Hohlräume durch gegen diese Stirnseite (64) anliegende Teile (66) der Kappe (70) radial nach außen im wesentlichen abgeschlossen sind.

2. Motor nach Anspruch 1, bei welchem am freien Ende der Welle (16) eine Spurkuppe (17) vorgesehen ist, welche mit der ihr gegenüberliegenden Seite (76) der Kappe (70) zusammenwirkt, um mit dieser ein Axiallager für den Rotor (14) zu bilden.

3. Motor nach Anspruch 1 oder 2, bei welchem das Gleitlagerelement ein Sinter-Doppellager (18) aufweist.

4. Motor nach einem oder mehreren der vorhergehenden Ansprüche, bei welchem auf der vom freien Ende der Rotorwelle (16) abgewandten Seite des Gleitlagerelements (18) ein Anschlag (60, 62) im Lagertragrohr (20) vorgesehen ist, zwischen welchem und der Kappe (70) das Gleitlagerelement (18) im Lagertragrohr (20) axial fixiert ist.

5. Motor nach einem oder mehreren der Ansprüche 1 bis 4, bei welchem zwischen der Kappe (70) und dem Lagertragrohr (20) eine Abdichtung (93) vorgesehen ist, welche einem Austritt von Schmiermittel zwischen Kappe (70) und Lagertragrohr (20) entgegenwirkt.

6. Motor nach Anspruch 5, bei welchem die Abdichtung (93) als Klebstoff ausgebildet ist.

7. Motor nach einem oder mehreren der vorhergehenden Ansprüche, bei welchem im Bereich des freien Endes der Rotorwelle (16) an dieser ein Lagerelement (19) befestigt ist, welches mit dem ihm gegenüberliegenden Ende des Gleitlagerelements (18) ein Axiallager für die Rotorwelle (16) bildet und ein Herausziehen der Rotorwelle (16) aus dem Gleitlagerelement (18) verhindert.

8. Motor nach einem der vorhergehenden Ansprüche, bei welchem die radial abstehenden Krallen (86) beim Einpressen in das Lagertragrohr (20) an einer Stelle abbiegbar sind, die radial innerhalb des größten Außenumfangs (92) des Kunststoffteils der Kappe (70) liegt.

9. Motor nach einem oder mehreren der vorhergehenden Ansprüche, welcher als Außenläufermotor (10) ausgebildet ist, dessen Außenrotor (14) als permanentmagnetischer Außenrotor ausgebildet ist,
und der einen Stator mit einem Statorblechpaket (38) aufweist, das sich radial innerhalb des Rotormagneten (34) befindet.

10. Motor nach Anspruch 9, bei welchem der Rotor (14) im wesentlichen in einem magnetischen Gleichgewichtszustand relativ zum Statorblechpaket (38) angeordnet ist, um eine in Achsrichtung wirkende magnetische Kraft zwischen Rotor (14) und Stator (38) zu reduzieren oder zu vermeiden.

11. Motor nach Anspruch 9 oder 10, bei welchem der Innenstator (38) mit einem Kunststoff (56) umspritzt ist.

12. Motor nach Anspruch 11, bei welchem die Kunststoffumspritzung (56) die Luftspaltseite des Innenstators (38) überdeckt.

13. Motor nach Anspruch 11 oder 12, bei welchem die Kunststoffumspritzung (56) eine dem Innenstator (38) zugeordnete Leiterplatte (46) mindestens teilweise überdeckt.

14. Motor nach einem oder mehreren der vorhergehenden Ansprüche, bei welchem die axiale Lagerung der Rotorwelle (16) ein Spiel (90) aufweist.

15. Motor nach einem der vorhergehenden Ansprüche, bei welchem die Kappe (70) das Gleitlagerelement (18) durch Beaufschlagung von dessen der Kappe (70) zugewandter Stirnseite (64) in seiner axialen Lage im Lagertragrohr (20) fixiert.

## Claims

1. Motor with a rotor (14) provided with a rotor shaft (16), and a stator (38, 42), in whose radially inner area there is a bearing supporting tube (20) in which is disposed a plain bearing element (18) for supporting the rotor shaft (16), with a cap (70) which is provided in the area of the free end (17) of the rotor shaft (16) and comprises radially protruding claws (86) made of steel or bronze sheet which are incorporated in the moulded cap (70) and with whose aid it is fastened in an associated area of the bearing supporting tube (20) and immobilises the plain bearing element (18) in its axial position in the bearing supporting tube (20), wherein the cap (70) comprises radial chambers (82) for reception of lubricant which are located in the area of its internal circumference (18) and are at least partly in direct communication with the associated front side (64) of the plain bearing element (18) in order to allow lubricant to flow back out the cap (70) to the plain bearing element (18), and the cavities formed by the chambers (82) together with the associated front side (64) of the plain bearing element (18) are essentially sealed radially towards the outside by parts (66) of the cap (70) bearing against this front side (64).

2. Motor according to claim 1, in which a domed thrust surface (17) is provided at the free end of the shaft (16) and co-operates with the facing side (76) of the cap (70) in order to form with the latter an axial bearing for the rotor (14).

3. Motor according to claim 1 or 2, in which the plain bearing element comprises a sintered double bearing (18).

4. Motor according to one or more of the preceding claims, in which a stop (60, 62) is provided in the bearing supporting tube (20) on the side of the plain bearing element (18) facing away from the free end of the rotor shaft (16), between which stop and the cap (70) the plain bearing element (18) is immobilised axially in the bearing supporting tube (20).

5. Motor according to one or more of claims 1 to 4, in which a seal (93) is provided between the cap (70) and the bearing supporting tube (20), which seal counteracts emergence of lubricant between the cap (70) and the bearing supporting tube (20).

6. Motor according to claim 5, in which the seal (93) takes the form of adhesive.

7. Motor according to one or more of the preceding claims, in which a bearing element (19) is fastened to the rotor shaft (16) in the area of its free end and with the facing end of the plain bearing element (18) forms an axial bearing for the rotor shaft (16) and prevents extraction of the rotor shaft (16) from the plain bearing element (18).

8. Motor according to one of the preceding claims, in which, when pressed into the bearing supporting tube (20), the radially protruding claws (86) can be bent at a point lying radially within the greatest external circumference (92) of the plastic part of the cap (70).

9. Motor according to one or more of the preceding claims, which is embodied as an external rotor motor (10), whose external rotor (14) takes the form of a permanent magnet external rotor, and which comprises a stator with a stator laminations pack (38) which is located radially within the rotor magnet (34).

10. Motor according to claim 9, in which the rotor (14) is essentially disposed in a state of magnetic equilibrium relative to the stator laminations pack (38) in order to reduce or avoid a magnetic force acting in the axial direction between the rotor (14) and the stator (38).

11. Motor according to claim 9 or 10, in which the internal stator (38) is encased in a plastic moulding (56).

12. Motor according to claim 11, in which the encasing plastic moulding (56) covers the air gap side of the internal stator (38).

13. Motor according to claim 11 or 12, in which the encasing plastic moulding (56) at least partially covers a circuit board (46) associated with the internal stator (38).

14. Motor according to one or more of the preceding claims, in which the axial bearing of the rotor shaft (16) exhibits a clearance (90).

15. Motor according to one of the preceding claims, in which the cap (70) immobilises the plain bearing element (18) in its axial position in the bearing supporting tube (20) by acting on its front side (64) facing the cap (70).

## Revendications

1. Moteur avec un rotor (14) muni d'un arbre de rotor (16) et avec un stator (38, 42) qui contient dans son domaine intérieur en direction radiale un tube-support de palier (20) dans lequel est disposé un élément de palier lisse (18) pour la suspension de l'arbre de rotor (16), avec un capuchon (70) prévu au niveau de l'extrémité libre (17) de l'arbre de rotor (16), lequel présente des crampons (86) en tôle d'acier ou de bronze, en saillie radiale, injectés dans le capuchon (70), à l'aide desquels il est fixé dans une zone correspondante du tube-support de palier (20) et l'élément de palier lisse (18) est maintenu dans sa position axiale dans le tube-support de palier (20),
le capuchon (70) présentant au niveau de sa circonférence intérieure des chambres radiales (82) prévues pour recevoir du lubrifiant, lesquelles chambres (82) sont au moins partiellement en communication directe avec la face frontale (64) correspondante de l'élément de palier lisse (18) pour permettre un reflux du lubrifiant du capuchon (70) vers l'élément de palier lisse (18),
et les vides formés par les chambres (82) conjointement avec la face frontale (64) correspondante de l'élément de palier lisse (18) étant essentiellement fermés radialement vers l'extérieur par des pièces (66) du capuchon (70) portant sur cette face frontale (64).

2. Moteur selon la revendication 1, dans lequel il est prévu à l'extrémité libre de l'arbre (16) une calotte (17) qui coopère avec le côté (76) du capuchon (70) qui lui fait face pour former avec lui un palier axial pour le rotor (14).

3. Moteur selon la revendication 1 ou 2, dans lequel l'élément de palier lisse présente un palier double fritté (18).

4. Moteur selon l'une ou plusieurs des revendications précédentes, dans lequel il est prévu du côté de l'élément de palier lisse (18) opposé à l'extrémité libre de l'arbre de rotor (16) une butée (60, 62) dans le tube-support de palier (20), entre laquelle et le capuchon (70) l'élément de palier lisse (18) est maintenu axialement dans le tube-support de palier (20).

5. Moteur selon l'une ou plusieurs des revendications 1 à 4, dans lequel il est prévu entre le capuchon (70) et le tube-support de palier (20) un joint d'étanchéité (93) qui empêche une sortie de lubrifiant entre le capuchon (70) et le tube-support de palier (20).

6. Moteur selon la revendication 5, dans lequel le joint d'étanchéité (93) est formé par de la colle.

7. Moteur selon l'une ou plusieurs des revendications précédentes, dans lequel il est fixé au niveau de l'extrémité libre de l'arbre de rotor (16), sur celui-ci, un élément de palier (19) qui forme avec l'extrémité de l'élément de palier lisse (18) qui lui fait face un palier axial pour l'arbre de rotor (16) et empêche l'extraction de l'arbre de rotor (16) de l'élément de palier lisse (18).

8. Moteur selon l'une ou plusieurs des revendications précédentes, dans lequel les crampons (86) en saillie radiale peuvent être pliés lors de l'enfoncement dans le tube-support de palier (20) en un point qui se situe radialement à l'intérieur de la plus grande circonférence extérieure de la partie en plastique du capuchon (70).

9. Moteur selon l'une ou plusieurs des revendications précédentes, lequel est du type moteur à rotor extérieur (10) dont le rotor extérieur (14) est du type rotor extérieur à aimantation permanente, et qui présente un stator avec un empilage de tôles statorique (38) qui se trouve radialement à l'intérieur de l'aimant de rotor (34).

10. Moteur selon la revendication 9, dans lequel le rotor (14) est disposé essentiellement dans un état d'équilibre magnétique par rapport à l'empilage de tôles statorique (38) pour réduire ou éviter une force magnétique agissant en direction axiale entre le rotor (14) et le stator (38).

11. Moteur selon la revendication 9 ou 10, dans lequel le stator intérieur (38) est surmoulé avec une matière plastique (56).

12. Moteur selon la revendication 11, dans lequel le surmoulage de plastique (56) recouvre le côté entrefer du stator intérieur (38).

13. Moteur selon la revendication 11 ou 12, dans lequel le surmoulage de plastique (56) recouvre au moins partiellement une carte de circuits imprimés (46) associée au stator intérieur (38).

14. Moteur selon l'une ou plusieurs des revendications précédentes, dans lequel la suspension axiale de l'arbre de rotor (16) présente un jeu (90).

15. Moteur selon l'une ou plusieurs des revendications précédentes, dans lequel le capuchon (70) maintient l'élément de palier lisse (18) dans sa position axiale dans le tube-support de palier (20) par application d'une pression sur sa face frontale (64) tournée vers le capuchon (70).
